# DEMANDE DE BREVET EUROPEEN

(11) **EP 1 722 118 A1**
(43) Date de publication de la demande: **15.11.2006**
(21) Numéro de dépôt: 06290621.9
(22) Date de dépôt: 18.04.2006
(51) Int. Cl.: F16D 3/76, F16D 3/74, F16D 1/108

(54) **Dispositif d'accouplement en rotation d'une roue d'avion et d'un tachymètre**

(30) Priorité: 13.05.2005 FR 0504864
(71) Demandeur: MESSIER-BUGATTI, 78140 Velizy Villacoublay (FR)
(72) Inventeur: Maës, Bertrand, 92130 Issy les Moulineaux (FR)
(74) Mandataire: Blot, Philippe Robert Emile

(57) **Abrégé**

Le dispositif d'accouplement d'un tachymètre (20) et d'une roue (12) d'avion comporte un manchon déformable élastiquement (24) délimitant, à chaque extrémité axiale, une empreinte (26A, 26B) d'entraînement propre à coopérer avec un embout complémentaire (28A, 28B) reçu dans l'empreinte par emboîtement.

## Description

La présente invention concerne un dispositif d'accouplement en rotation d'une roue d'avion et d'un tachymètre.

Les avions modernes sont équipés, de nos jours, d'un dispositif permettant de déterminer la vitesse de rotation des roues, lors des phases d'atterrissage, de décollage et de déplacement sur une zone aéroportuaire.

Un tel dispositif comporte un tachymètre intégré dans la fusée de roue supportée par le train d'atterrissage et autour de laquelle la roue est montée à rotation.

Le tachymètre est relié à la roue par l'intermédiaire d'un dispositif d'accouplement permettant de lier en rotation l'arbre du tachymètre et une coupelle rapportée sur la jante de la roue suivant l'axe de celle-ci. La coupelle est solidaire en rotation de la roue.

Compte tenu des tolérances de montage et de l'usure des pièces mécaniques, il convient que le dispositif d'accouplement permette de compenser le décalage radial pouvant exister entre l'axe de rotation du tachymètre et l'axe de rotation de la coupelle de roue. De même, ce dispositif doit compenser l'éventuel décalage axial entre ces deux mêmes éléments. En outre, il doit absorber les vibrations dues à la rotation, tout en supportant les contraintes très sévères, notamment de température et de résistance aux agressions chimiques et mécaniques dans cette région particulièrement sollicitée d'un avion.

Les dispositifs mécaniques d'accouplement actuels prévus sur les avions sont formés de pièces mécaniques mobiles les unes par rapport aux autres, et notamment de joints tripodes dont la structure est relativement complexe et dont le coût est donc élevé.

L'invention a pour but de proposer un dispositif d'accouplement et un élément de train d'atterrissage d'un avion d'un coût réduit.

A cet effet, l'invention a pour objet un dispositif d'accouplement en rotation du type précité, caractérisé en ce qu'il comporte un manchon déformable élastiquement délimitant, à chaque extrémité axiale, une empreinte d'entraînement propre à coopérer avec un embout complémentaire reçu dans l'empreinte par emboîtement.

Suivant des modes particuliers de réalisation, le dispositif d'accouplement comporte l'une ou plusieurs des caractéristiques suivantes :
- les empreintes d'entraînement présentent une section identique et sont délimitées par un même conduit traversant le manchon de part en part ;
- la section d'au moins une empreinte d'entraînement comporte plusieurs lobes angulairement répartis régulièrement autour de l'axe du manchon ;
- la ou chaque empreinte comporte trois lobes régulièrement répartis angulairement ;
- chaque lobe est délimité latéralement par deux flancs bombés vers l'intérieur du conduit, reliés entre eux par un fond ;
- la dureté Shore A du matériau constituant le manchon est comprise entre 65 et 85 et est avantageusement sensiblement égale à 75 ;
- la rupture à l'allongement du matériau constituant le manchon est comprise entre 3200 PSI et 4000 PSI ;
- l'allongement du matériau constituant le manchon est compris entre 200 % et 300 % ; et
- il est constitué d'un caoutchouc de butadiène nitrile hydrogéné.

L'invention a également pour objet un élément de train d'atterrissage comportant une fusée de roue et une jante de roue montée en rotation autour de la fusée, un tachymètre engagé dans la fusée de roue, et un dispositif d'accouplement en rotation tel que décrit ci-dessus, le tachymètre comportant un embout engagé dans une empreinte du manchon et la jante étant solidaire d'un autre embout engagé dans l'autre empreinte du manchon.

L'invention sera mieux comprise à la lecture de la description qui va suivre, donnée uniquement à titre d'exemple et faite en se référant aux dessins, sur lesquels :
- la figure 1 est une vue en coupe longitudinale schématique d'un élément de train d'atterrissage intégrant un dispositif d'accouplement selon l'invention ;
- la figure 2 est une vue en perspective du manchon du dispositif d'accouplement selon l'invention ;
- les figures 3 et 4 sont des vues en coupe respectivement longitudinale et transversale du manchon de la figure 2 ;
- les figures 5 et 6 sont des vues en section de l'arbre du tachymètre et de l'embout d'entraînement prévu sur la coupelle.

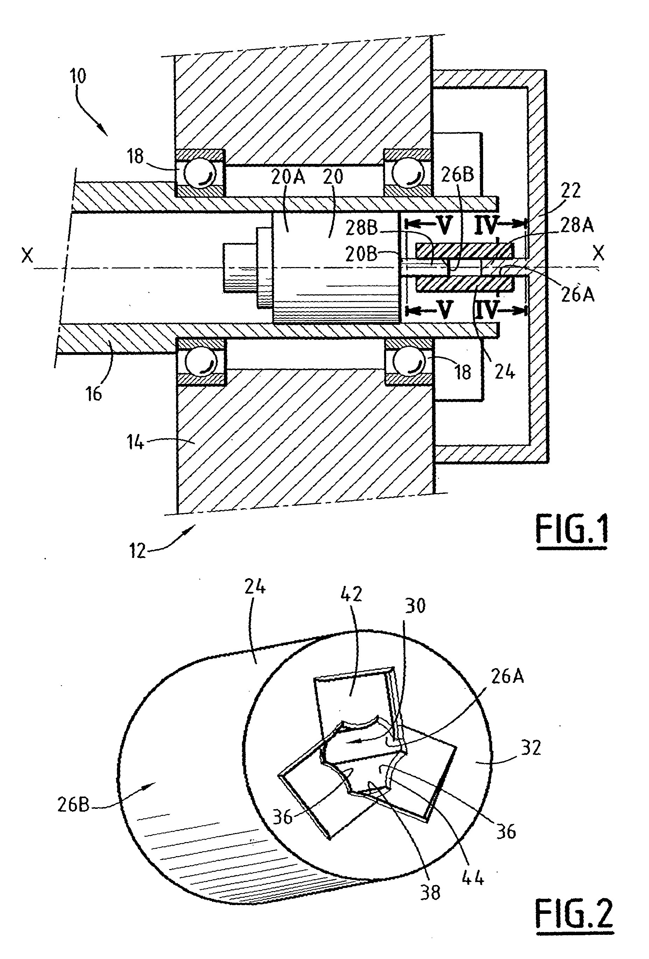

Sur la figure 1 est représenté schématiquement un élement de train d'atterrissage 10. Celui-ci comporte une roue 12 dont seule une jante 14 est représentée ainsi qu'un moyeu 16 solidaire du train d'atterrissage et autour duquel la jante 14 est montée mobile en rotation autour d'un axe X-X par l'intermédiaire de deux roulements à billes 18. Comme connu en soi, un tachymètre 20 est intégré à l'intérieur de la fusée de roue 16 pour la mesure de la vitesse de rotation de la roue.

La jante 14 est équipée d'une coupelle axiale 22 disposée en regard du tachymètre et solidaire en rotation de la roue.

Le tachymètre est constitué, par exemple, d'un corps 20A solidaire du moyeu 16 et d'un arbre rotatif 20B monté sensiblement pour une rotation suivant sensiblement l'axe X-X, lequel arbre 20B entraîne un rotor constitué, par exemple, d'un codeur optique ou d'un aimant dont la position est déterminée afin de calculer la vitesse de rotation de la roue, comme connu en soi.

Un dispositif d'accouplement 24 en rotation est disposé entre la coupelle 22 et l'arbre 20B. Ce dispositif est représenté seul sur les figures 2 à 4. II comprend et est avantageusement constitué d'un manchon déformable élastiquement délimitant, à chaque extrémité axiale, une empreinte d'entraînement 26A, 26B dans chacune desquelles est reçu un embout d'entraînement de profil complémentaire noté, respectivement, 28A et 28B, l'embout 28A étant solidarisé en rotation à la coupelle 22 sensiblement suivant l'axe de rotation X-X alors que l'embout 28B est formé de l'extrémité de l'arbre 20B du tachymètre. Seuls les profils complémentaires en section des empreintes et des embouts assurent la liaison en rotation à défaut de tout autre moyen d'immobilisation.

Le manchon 24 est extérieurement cylindrique de révolution.

Avantageusement, les profils en section des empreintes sont identiques, de sorte que les empreintes 26A, 26B délimitées dans le manchon 24 sont formées par les tronçons extrêmes d'un même conduit 30 de section constante traversant de part en part le manchon 24 et débouchant suivant des surfaces d'extrémités opposées 32 s'étendant parallèlement l'une à l'autre perpendiculairement à l'axe X-X du conduit 30.

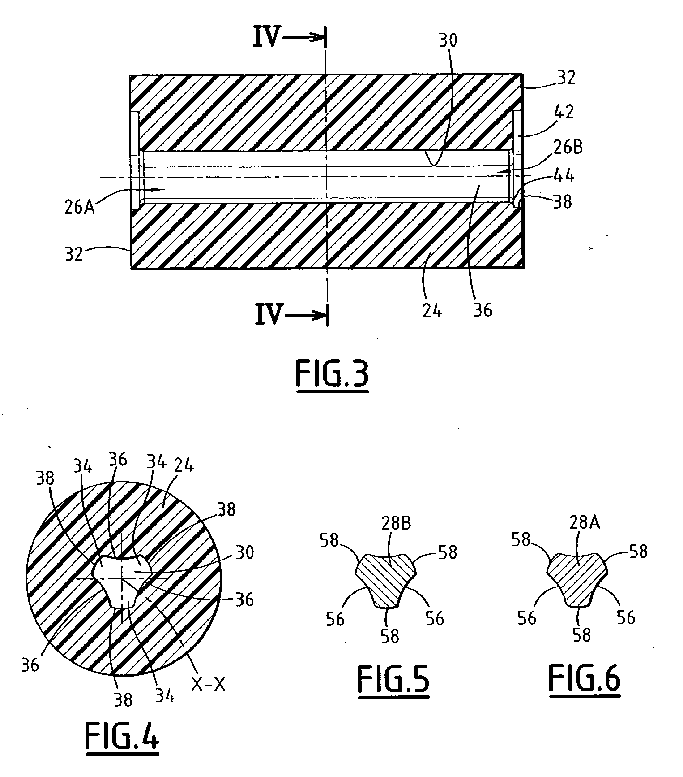

Les sections des embouts 28A et 28B sont représentées, respectivement, sur les figures 5 et 6.

De préférence, les embouts 28A et 28B sont engagés dans le manchon suivant une longueur comprise entre le quart et les deux-cinquièmes du manchon. De préférence, la longueur d'insertion est de l'ordre du tiers de la longueur du manchon, pour chaque embout.

Avantageusement, la longueur du manchon est de l'ordre 35 mm (1,378 pouce) pour un diamètre de l'ordre de 18 mm (0,709 pouce).

Le conduit présente, suivant les régions, un rayon compris entre 5,5 mm (0,217 pouce) et 2 mm (0, 079 pouce).

En section, le conduit 30 présente plusieurs lobes 34 angulairement régulièrement répartis autour de l'axe X-X. Ces lobes sont avantageusement au nombre de trois. Ils sont délimités par trois flancs 36 bombés vers l'intérieur du conduit 30 de section constante et reliés les uns aux autres par des fonds généralement convexes 38.

En section, les flancs bombés 36 présentent un rayon de courbure sensiblement constant sur toute leur étendue angulaire.

Chaque fond 38 s'étend angulairement sur un tronçon compris entre 20° et 40° et par exemple de l'ordre de 30°. Les flancs bombés 36 opposés d'un même lobe présentent, à leurs extrémités de liaison au fond 38, des tangentes délimitant entre elles un angle compris entre 20° et 40° et par exemple de l'ordre de 30°.

Aux extrémités débouchantes du conduit 30, les parois d'extrémité 32 du manchon présentent chacune des encoches radiales 42 s'étendant chacune depuis la partie médiane des fonds 38 où elles se rejoignent. Ainsi, les encoches 42 ont un même axe de symétrie que les flancs 36 et sont chacune diamétralement opposées à un lobe 34. Ces encoches sont destinées à faciliter l'emmanchement sur l'axe du tachymètre.

De préférence, le manchon est formé d'un seul bloc dans un matériau en matière plastique. Ce matériau est formé de préférence d'un caoutchouc de la famille des HNBR (caoutchouc de butadiène, nitrile hydrogéné) dont les propriétés sont compatibles avec l'environnement des roues d'avion concernant les températures et les fluides.

La dureté Shore A (ASTM D2240) du matériau constituant le manchon est de préférence comprise entre 65 et 85 et est avantageusement sensiblement égale à 75. L'effort de rupture à l'allongement (ASTM D1414) est comprise de préférence entre 3200 et 4000 PSI. Il est avantageusement de l'ordre de 3680 PSI.

L'allongement du matériau constituant le manchon (ASTM D1414) est compris entre 200 % et 300 %. Il est avantageusement de l'ordre de 244 %.

A chaque extrémité, le conduit 30 présente un congé 44 de liaison généralement arrondi entre les surfaces s'étendant suivant l'axe X-X et les surfaces transversales d'extrémité 32 du manchon afin de former un profil convergeant vers l'intérieur du conduit permettant le guidage des embouts 28A et 28B lors de leur montage.

Les embouts 28A et 28B présentent des sections exactement complémentaires à celle du conduit 30. Ainsi, en section, chaque embout présente trois bras angulairement décalés de 120°, ces bras étant délimités par des flancs incurvés 56 reliés les uns aux autres par des parois d'extrémité bombées 58.

On conçoit que l'engagement des embouts 28A et 28B dans le conduit 30 du manchon permet un entraînement en rotation de l'arbre 20B à partir de la rotation de la coupelle 22 solidaire de la jante de la roue.

En outre, le manchon étant choisi suffisamment déformable, celui-ci permet de compenser les déplacements radiaux et axiaux de la coupelle par rapport à l'arbre 20B, ces déplacements résultant des tolérances de fabrication et de l'usure des différents éléments.

Le manchon étant injecté d'un seul bloc, celui-ci peut être réalisé pour un coût réduit.

## Revendications

1. Dispositif d'accouplement en rotation d'un tachymètre (20) et d'une roue (12) d'avion, **caractérisé en ce qu'**il comporte un manchon déformable élastiquement (24) délimitant, à chaque extrémité axiale, une empreinte (26A, 26B) d'entraînement propre à coopérer avec un embout complémentaire (28A, 28B) reçu dans l'empreinte par emboîtement.

2. Dispositif d'accouplement selon la revendication 1, **caractérisé en ce que** les empreintes d'entraînement (26A, 26B) présentent une section identique et sont délimitées par un même conduit (30) traversant le manchon (24) de part en part.

3. Dispositif d'accouplement selon la revendication 1 ou 2, **caractérisé en ce que** la section d'au moins une empreinte d'entraînement (26A, 26B) comporte plusieurs lobes (34) angulairement répartis régulièrement autour de l'axe du manchon (24).

4. Dispositif d'accouplement selon la revendication 3, **caractérisé en ce que** la ou chaque empreinte (26A, 26B) comporte trois lobes (34) régulièrement répartis angulairement.

5. Dispositif d'accouplement selon la revendication 3 ou 4, **caractérisé en ce que** chaque lobe (34) est délimité latéralement par deux flancs (36) bombés vers l'intérieur du conduit, reliés entre eux par un fond (38).

6. Dispositif d'accouplement selon l'une quelconque des revendications précédentes, **caractérisé en ce que** la dureté Shore A du matériau constituant le manchon (24) est comprise entre 65 et 85 et est avantageusement sensiblement égale à 75.

7. Dispositif d'accouplement selon l'une quelconque des revendications précédentes, **caractérisé en ce que** la rupture à l'allongement du matériau constituant le manchon (24) est comprise entre 3200 PSI et 4000 PSI.

8. Dispositif d'accouplement selon l'une quelconque des revendications précédentes, **caractérisé en ce que** l'allongement du matériau constituant le manchon (24) est compris entre 200 % et 300 %.

9. Dispositif d'accouplement selon l'une quelconque des revendications précédentes, **caractérisé en ce qu'**il est constitué d'un caoutchouc de butadiène nitrile hydrogéné.

10. Elément de train d'atterrissage comportant une fusée de roue (16) et une jante de roue (14) montée en rotation autour de la fusée (16), un tachymètre (20) engagé dans la fusée de roue (16), et un dispositif de connexion en rotation selon l'une quelconque des revendications précédentes, le tachymètre comportant un embout (28B) engagé dans une empreinte (26B) du manchon et la jante (14) étant solidaire d'un autre embout (28B) engagé dans l'autre empreinte (26A) du manchon.
